# EUROPEAN PATENT APPLICATION

(11) **EP 4 336 611 A1**
(43) Date of publication of application: **13.03.2024**
(21) Application number: 23191422.7
(22) Date of filing: 14.08.2023
(51) Int. Cl.: H01M 10/04, H01M 10/052, H01M 10/0583, H01M 50/46, H01M 50/466, H01M 10/42

(54) **ELECTRODE ASSEMBLY FOR SECONDARY BATTERY, MANUFACTURING METHOD THEREOF, AND LITHIUM SECONDARY BATTERY COMPRISING SAME**

(30) Priority: 17.08.2022 KR 20220102961
(71) Applicant: SK On Co., Ltd., Seoul 03161 (KR)
(72) Inventor: JUNG, Jae Young, 34124 Daejeon (KR); YANG, Ji Won, 34124 Daejeon (KR); JEONG, Dong Hee, 34124 Daejeon (KR); CHO, Woo Yeon, 34124 Daejeon (KR)
(74) Representative: Prüfer & Partner mbB Patentanwälte · Rechtsanwälte

(57) **Abstract**

An electrode assembly for secondary battery according to an Example of the present application may comprise a plurality of anode plates; a plurality of cathode plates; and a separator disposed between the plurality of cathode plates and the plurality of anode plates, wherein the separator may be folded in a zigzag shape, and the plurality of anode plates and the plurality of cathode plates may be alternately stacked in a section between folded portions of the separator to form a stack, and an anode plate may be disposed on an uppermost portion and a lowermost portion of the stack.

## Description

### BACKGROUND OF THE INVENTION

### 1. Field

Examples of the present invention relate to an electrode assembly for secondary battery, a manufacturing method thereof, and a lithium secondary battery comprising the same.

### 2. Description of the Related Art

As the electronics, communications, and space industries develop, demand for lithium secondary batteries as an energy power source is drastically increasing. In particular, as the importance of global eco-friendly policies is emphasized, the electric vehicle market is growing swiftly, and research and development on lithium secondary batteries are being actively conducted worldwide.

A lithium secondary battery comprises a cathode, an anode, and a separator disposed therebetween, and a cathode and an anode are each provided with an active material which lithium ions can be inserted to and extracted from.

To increase energy density, that is, volumetric energy density (energy per unit volume of battery) of secondary batteries, the thickness of secondary batteries is being gradually reduced. At the same time, to prevent a short circuit between electrodes and ensure product quality, there is a need to adjust the dimensions and spacings of individual components in a secondary battery and align the positions of individual components accordingly.

### SUMMARY OF THE INVENTION

Examples of the present invention provide electrode assembly for secondary battery of a new shape, a manufacturing method thereof, and a lithium secondary battery comprising the same.

An electrode assembly for secondary battery according to an Example of the present invention comprises a plurality of anode plates; a plurality of cathode plates; and a separator disposed between the plurality of cathode plates and the plurality of anode plates, wherein the separator is folded in a zigzag shape, and the plurality of anode plates and the plurality of cathode plates are alternately stacked in a section between folded portions of the separator to form a stack, and an anode plate may be disposed on an uppermost portion and a lowermost portion of the stack.

In an example, the separator externally may finish the stack by winding around an outer edge of the stack.

In an example, the separator may wind around an outer edge of the stack along a stacking direction of the stack.

In an example, an end of the separator may be fixed to a side surface of the stack.

In an example, an end of the separator may be fixed to a side surface of the stack by an adhesive.

In an example, a separator of two or more layers may be located under the stack.

In an example, the area of the plurality of anode plates may be larger than the area of the plurality of cathode plates.

In an example, the area of the section between folded portions of the separator may be larger than the area of each of the plurality of anode plates.

In an example, the length and the width of the plurality of anode plates may be greater than the length and the width of the plurality of cathode plates, respectively.

In an example, the length and the width of the section between folded portions of the separator may be greater than the length and the width of the plurality of anode plates, respectively.

In an example, the length and the width may be a length-direction dimension and a width-direction dimension of the stack.

In an example, the width-direction may be a direction in which the separator is folded

In an example, the length-direction may be perpendicular to the stacking direction of the stack and the width-direction.

In an example, a length-direction gap of the plurality of anode plates and the plurality of cathode plates may be larger than a width-direction gap of the plurality of anode plates and the plurality of cathode plates.

In an example, a length of the section between folded portions of the separator and a length-direction gap of the plurality of anode plates may be larger than a width of the section between folded portions of the separator and a width-direction gap of the plurality of anode plates.

In an example, the length-direction gap may be a distance difference from the center of the anode plates, the cathode plates, and the section between folded portions of the separator to one length-direction end of each of the anode plates, the cathode plates, and the section between folded portions of the separator.

In an example, the width-direction gap may be a distance difference from the center of the anode plates, the cathode plates, and the section between folded portions of the separator to one width-direction end of each of the anode plates, the cathode plates, and the section between folded portions of the separator.

In an example, the plurality of anode plates may fully cover the plurality of cathode plates in both the length direction and the width direction.

In an example, the section between folded portions of the separator may fully cover the plurality of anode plates in both the length direction and the width direction.

In an example, a length-direction gap of the plurality of anode plates and the plurality of cathode plates may be 2.0 mm to 5.0 mm.

In an example, a width-direction gap of the plurality of anode plates and the plurality of cathode plates may be 0.5 mm to 2.0 mm.

In an example, a length of the section between folded portions of the separator and a length-direction gap of the plurality of anode plates may be 2.0 mm to 5.0 mm.

In an example, a width of the section between folded portions of the separator and a width-direction gap of the plurality of anode plates may be 0.5 mm to 2.0 mm.

A manufacturing method of an electrode assembly for secondary battery according to an Example of the present invention comprises: forming a stack in which one or more cathode plates, one or more anode plates, and a separator are located between two anode plates located at an uppermost portion and a lowermost portion; and winding around an outer edge of the stack with the separator, wherein the separator is folded in a zigzag shape, and in the stack, the one or more cathode plates and the one or more anode plates may be alternately stacked in a section between folded portions of the separator.

In an example, the forming a stack may comprise locating an anode plate on a separator and folding the separator on the anode plate and locating a cathode plate on the separator and folding the separator on the cathode plate.

In an example, the forming a stack may further comprise aligning positions of the anode plate and the cathode plate.

In an example, when viewed from the stacking direction of the stack, the cathode plate may be aligned so as not to protrude beyond the anode plate, and the anode plate may be aligned so as not to protrude beyond the section between folded portions of the separator.

In an example, the winding around an outer edge of the stack with the separator may comprise winding the separator in the stacking direction of the stack and fixing an end of the separator to a side surface of the stack.

According to the present technology, provided are an electrode assembly for secondary battery capable of securing sufficient product quality while having a thin thickness, a manufacturing method thereof, and a lithium secondary battery comprising the same.

### BRIEF DESCRIPTION OF THE DRAWINGS

FIG. 1 is a diagram for explaining an electrode assembly for secondary battery according to an Example of the present invention.
FIG. 2 is a diagram for explaining the dimensions of each component of the electrode assembly for secondary battery according to an Example of the present invention.
FIG. 3 is a flowchart for explaining a manufacturing method of an electrode assembly for secondary battery according to an Example of the present invention.
FIG. 4 is a flowchart for explaining S 100 of FIG. 3.
FIG. 5 is a flowchart for explaining S200 of FIG. 3.
FIGS. 6A to 6G are diagrams for explaining a manufacturing process of an electrode assembly for secondary battery according to an Example of the present invention.

### DETAILED DESCRIPTION

According to an Example of the present application, an electrode assembly for secondary battery, comprising a plurality of anode plates; a plurality of cathode plates; and a separator disposed between the plurality of cathode plates and the plurality of anode plates, wherein the separator is folded in a zigzag shape, and the plurality of anode plates and the plurality of cathode plates are alternately stacked in a section between folded portions of the separator to form a stack, and an anode plate may be disposed an uppermost portion and a lowermost portion of the stack may be provided.

Hereinafter, an electrode assembly for secondary battery according to an Example of the present invention will be described in detail for each component.

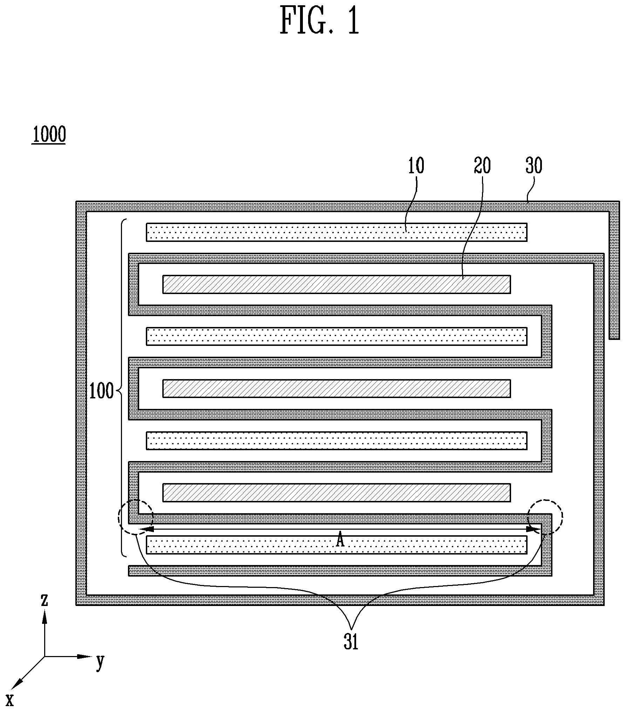

FIG. 1 is a diagram for explaining an electrode assembly for secondary battery according to an Example of the present invention.

Referring to FIG. 1, an electrode assembly 1000 for secondary battery according to an Example of the present invention may comprise a stack 100 comprising a plurality of anode plates 10, a plurality of cathode plates 20, and a separator 30.

An anode plate may be disposed on an uppermost portion and a lowermost portion of the stack 100. As illustrated in FIG. 1, the separator may be folded in a zigzag shape, and an anode plate 10 and a cathode plate 20 may be alternately, in other words, one after the other, stacked between folded portions of the separator. At this time, folded portions of a separator 30 may refer to the portions where the separator is folded, as indicated by 31 in FIG. 1, and a section between folded portions of a separator may refers to a section of the separator indicated by A in FIG. 1 between two folded portions 31 of the separator.

In this way, an electrode assembly in which anode plates and cathode plates are alternately stacked in a section between folded portions of a zigzag-folded separator may be referred to as a Z-folding (or zigzag folding, accordion folding) electrode assembly.

A separator 30 winds around an outer edge of a stack 100. Here, a separator 30 may wind around an outer edge of the stack 100 along a stacking direction (z-axis direction) of the stack 100. Accordingly, a separator 30 may externally finish a stack 100. In other words, a separator 30 may completely surround the outermost edge of a stack 100 so that an anode plate 10 and a cathode plate 20 may not be exposed to the outside. After a separator 30 completely winds around an outer edge of a stack 100, an end of the separator 30 may be fixed to a side surface of the stack 100. The side surface of a separator 100 may refer to a surface parallel to the XZ-plane among the outer circumferential surfaces of a stack 100.

In a conventional electrode assembly, an insulating tape is attached to a stacking surface of a stack consisting of a cathode plate, an anode plate, and a separator. Since an insulating tape is overlapped with an winding end on an outer circumferential surface of an electrode assembly, the thickness in the stacking direction of a stack, for example, the thickness of an electrode assembly, should unavoidably be increased. On the contrary, in the case of an electrode assembly 1000 for secondary battery according to an Example of the present invention, since an end of a separator 30 is fixed to on a side surface of a stack 100, a thin electrode assembly having uniform thickness may be manufactured without an increase of the thickness in the stacking direction, and an electrode assembly manufactured in this manner may be used to improve energy density of secondary batteries.

Furthermore, since a fixed portion is disposed to be orthogonal to a stacking surface, interfering effects such as swelling may be minimized. When a secondary battery is overcharged, an electrolyte impregnated in an electrode assembly vaporizes, causing swelling in which a pouch exterior material itself swells. At this time, as the volume expands in the stacking direction of the electrode assembly, considerable surface pressure is unavoidably applied to the stacking surface. In an electrode assembly 1000 according to an Example of the present invention, a bonding area is disposed on a vertical surface that is orthogonal to the stacking surface, that is, on a side surface of a stack 100 away from a swelling portion, so that shrinkage or expansion of the bonding area can be minimized during the expansion by swelling, thereby securing stability of the exterior finish by a separator 30.

In addition, an end of a separator 30 may be fixed to a side surface of a stack 100 by an adhesive. Such an adhesive may be an insulative adhesive. As described above, the conventional electrode assembly is finished by attaching an adhesive tape on a stacking surface, whereas in an electrode assembly 1000 according to an Example of the present invention, in place of an adhesive tape, an adhesive is interposed between an end of a separator 30 and a portion of the separator 30 located on a side surface of a stack 100 to form a bonding area.

When a stack 100 is externally finished with a separator 30, a separator of two or more layers may be located under the stack 100. In other words, since a stack 100 is defined from an anode plate 10 at a lowermost portion to an anode plate 10 at an uppermost portion according to the present specification, a separator of two or more layers 30 may be located under an anode plate 10 at a lowermost portion.

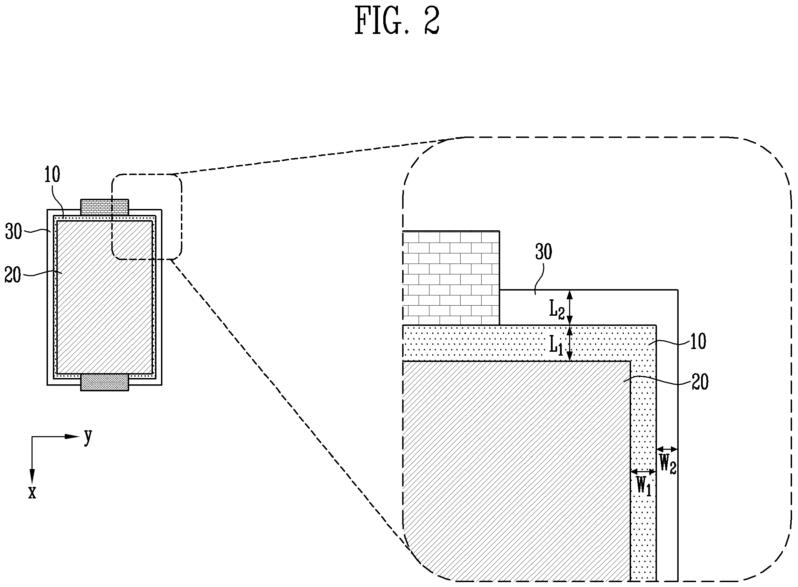

FIG. 2 is a diagram for explaining the dimensions of each component of the electrode assembly for secondary battery according to an Example of the present invention.

In an electrode assembly 1000 for secondary battery according to an Example of the present invention, the dimensions of an anode plate 10, a cathode plate 20, and a separator 30 may be adjusted within a specific range to prevent a short circuit between electrodes and to secure product quality. For example, a difference in length and width between an anode plate 10, a cathode plate 20, and a separator 30 may be adjusted. Here, the width may refer to a dimension in the folding direction of a separator 30, that is, the Y-direction of a stack 100, and the length may refer to a direction that is perpendicular to a stacking direction and the width direction of a stack 100, that is, the length of the stack 100 in the X-axis direction.

In one Example, the area of an anode plate 10 may be larger than the area of the cathode plate 20. More specifically, the length and the width of an anode plate 10 may be greater than the length and the width of a cathode plate 20, respectively.

In addition, in one Example, the area of a section between folded portions of a separator 30 may be larger than the area of an anode plate 10. More specifically, the length and the width of a section between folded portions of a separator 30 may be greater than the length and the width of an anode plate 10, respectively.

In addition, under conditions satisfying these dimensions, when viewed in the stacking direction (Z-axis direction) of a stack 100, a cathode plate 20 may be aligned so as not to protrude beyond an anode plate 10, and an anode plate 10 may be aligned so as not to protrude beyond a section between folded portions of a separator 30. Therefore, an anode plate 10 may cover a cathode plate 20 in both the length direction (X-axis direction) and the width direction (Y-axis direction), and a section between folded portions of a separator 30 may cover an anode plate 10 in both the length direction (X-axis direction) and the width direction (Y-axis direction).

In one Example, a length-direction gap L1 of an anode plate 10 and a cathode plate 20 may be larger than a width-direction gap W1 of the anode plate 10 and the cathode plate 20. In addition, a length-direction gap L2 of a section between folded portions of a separator 30 and an anode plate 10 may be larger than a width-direction gap W2 of the section between folded portions of the separator 30 and the anode plate 10. At this time, the length-direction gap may refer to a distance difference from the center of each of an anode plate 10, a cathode plate 20, and a section between folded portions of a separator 30 to one length-direction end of each of the anode plate 10, the cathode plate 20, and the section between folded portions of the separator 30. In addition, the width-direction gap may refer to a distance difference from the center of each of an anode plate 10, a cathode plate 20, and a section between folded portions of a separator 30 to one width-direction end of each of the anode plate 10, the cathode plate 20, and the section between folded portions of the separator 30.

In the width direction (Y-axis direction), since an end of a stack 100 is blocked by a separator 30, the risk of falling and short circuit of an anode plate 10 and a cathode plate 20 is relatively low, whereas in the length direction (X-axis direction) direction), since an end of the stack 100 is open, the risk of falling and short circuit of an anode plate 10 and a cathode plate 20 may be relatively high. Accordingly, falling and short circuit of an anode plate 10 and a cathode plate 20 may be preferably prevented by setting a length-direction gap L1 of an anode plate 10 and a cathode plate 20 to be greater than a width-direction gap W1 of the anode plate 10 and the cathode plate 2 and by setting a length-direction gap L2 of a section between folded portions of a separator 30 and an anode plate 10 to be greater than a width-direction gap W2 of the section between folded portions of the separator 30 and the anode plate 10.

In one Example, a length-direction gap L1 of an anode plate 10 and a cathode plate 20 and a length-direction gap L2 of a section between folded portions of a separator 30 and an anode plate 10 may be 2.0 mm to 5.0 mm, preferably, 2.0 mm to 3.0 mm. In addition, a width-direction gap W1 of an anode plate 10 and a cathode plate 20 and a width-direction gap W2 of a section between folded portions of a separator 30 and an anode plate 10 may be 0.5 mm to 2.0 mm, preferably, 0.5 mm to 1.0 mm.

In one Example, an allowable tolerance of a length-direction gap L1 of an anode plate 10 and a cathode plate 20 and of a length-direction gap L2 of a section between folded portions of a separator 30 and an anode plate 10 may be within 50% of each of L1 and L2, preferably, within 40%, more preferably, within 30%.

In addition, a allowable tolerance of a width-direction gap W1 of an anode plate 10 and a cathode plate 20 and a width-direction gap W2 of a section between folded portions of a separator 30 and an anode plate 10 may be within 90% of each of W1 and W2, preferably, within 80%, more preferably, within 70%.

According to an Example of the present invention, a manufacturing method of an electrode assembly for secondary battery, comprising: forming a stack in which one or more cathode plates, one or more anode plates, and a separator are located between two anode plates located at an uppermost portion and a lowermost portion; and winding around an outer edge of the stack with the separator, wherein the separator is folded in a zigzag shape, and in the stack, the one or more cathode plates and the one or more anode plates may be alternately stacked in a section between folded portions of the separator may be provided.

Hereinafter, a manufacturing method of an electrode assembly for secondary battery according to an Example of the present invention will be described in detail for each feature.

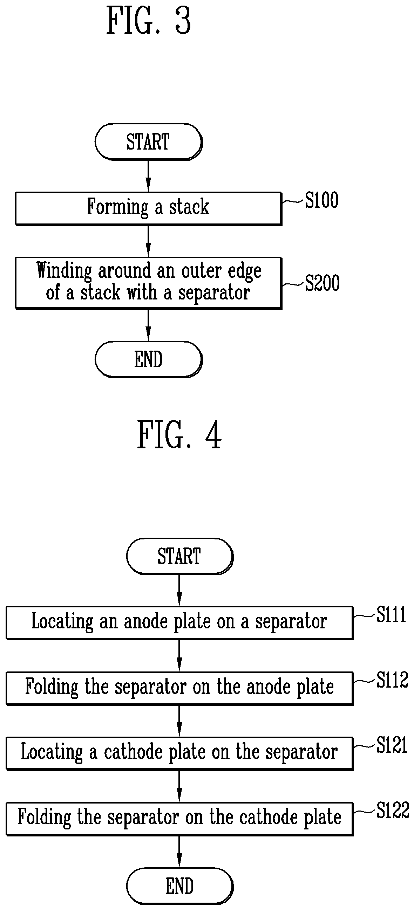

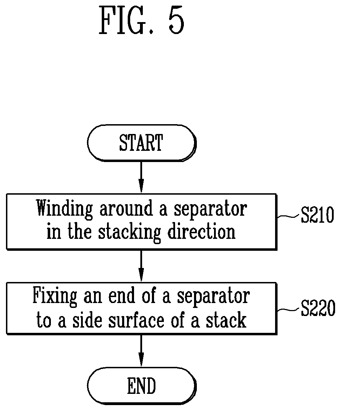

FIG. 3 is a flowchart for explaining a manufacturing method of an electrode assembly for secondary battery according to an Example of the present invention; FIG. 4 is a flowchart for explaining S 100 of FIG. 3; and FIG. 5 is a flowchart for explaining S200 of FIG. 3.

Referring to FIGS. 3 to 5, a manufacturing method of an electrode assembly for secondary battery according to an Example of the present invention may comprise forming a stack (S100). Such a stack may be the stack described above through FIGS. 1 and 2. Two anode plates may be located at a uppermost portion and a lowermost of a stack, and one or more cathode plates, one or more anode plates, and a separator may be positioned between the two anode plates. In a stack, one or more cathode plates and one or more anode plates may be alternately stacked in a section between folded portions of a separator.

Forming a stack (S100) may comprise locating an anode plate on a separator (S111); folding the separator on the anode plate (S112); locating a cathode plate on the separator (S121); and folding the separator on the cathode plate. By repeating S111 to S 122, a stack of a shape in which one or more cathode plates and one or more anode plates are alternately stacked in a section between folded portions of a separator may be formed.

In addition, forming a stack (S100) may further comprise aligning positions of an anode plate and a cathode plate. An anode plate, a cathode plate, and a separator may be set to satisfy respective dimensions and length-direction gap and width-direction gap ranges described above through FIG. 2. Accordingly, when viewed from the stacking direction of the stack, a cathode plate may be aligned so as not to protrude beyond an anode plate, and the anode plate may be aligned so as not to protrude beyond a section between folded portions of a separator. In one Example, to align an anode plate and a cathode plate, the center of electrode of each of the anode plate and the cathode plate may be found and aligned. For example, each of the centers of electrode may be aligned to coincide at one point when viewed from the stacking direction of a stack. In one Example, the center of electrode may be found by measuring an outer edge of each of a cathode plate and an anode plate, but the method is not limited thereto. After finding the center of electrode of each a cathode plate and an anode plate, the centers of electrode may be aligned in consideration of positions of the centers of electrode and the angle of each of the cathode plate and the anode plate.

In this way, aligning positions of an anode plate and a cathode plate may be performed each time when each of one anode plate and one cathode plate is stacked in a section between folded portion of a separator, or may be performed each time when a predetermined number of anode plates and cathode plates are stacked.

In addition, the manufacturing method of an electrode assembly for secondary battery according to an Example of the present invention may comprise winding around an outer edge of a stack with a separator (S200). Winding around an outer edge of a stack with a separator (S200) may comprise winding around a separator in the stacking direction (S210) and fixing an end of a separator to a side surface of a stack (S220).

In one Example, fixing an end of a separator to a side surface of a stack (S220) may be performed by applying an adhesive to a side surface of a stack or to an end of a separator. Here, the adhesive may be an insulating adhesive. In one Example, the application of an adhesive may be applied by means of an adhesive spray nozzle, but is not limited thereto. In addition, after applying an adhesive, an end of a separator may be brought into contact with a side surface of a stack, and then, to ensure a sufficient bonding state, pressurizing the end of the separator and the side surface of the stack may be performed. Here, the pressurizing may be performed by applying pressure with a brush or a roller or by using pneumatic pressure of a blow.

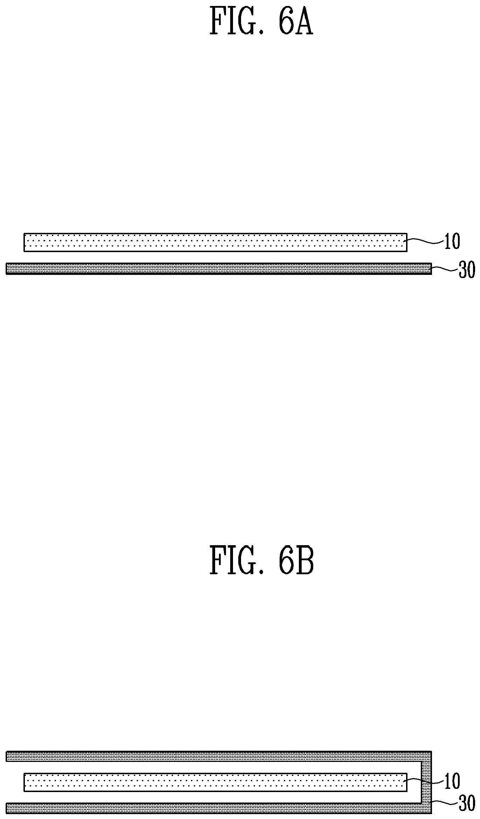

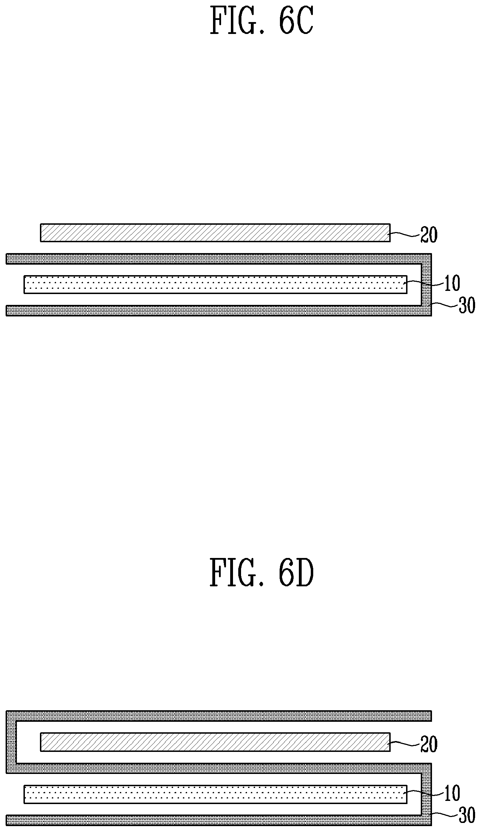

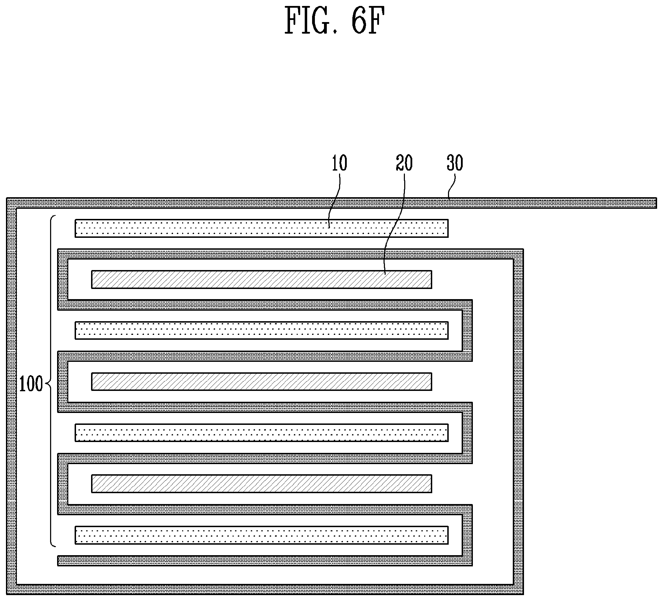

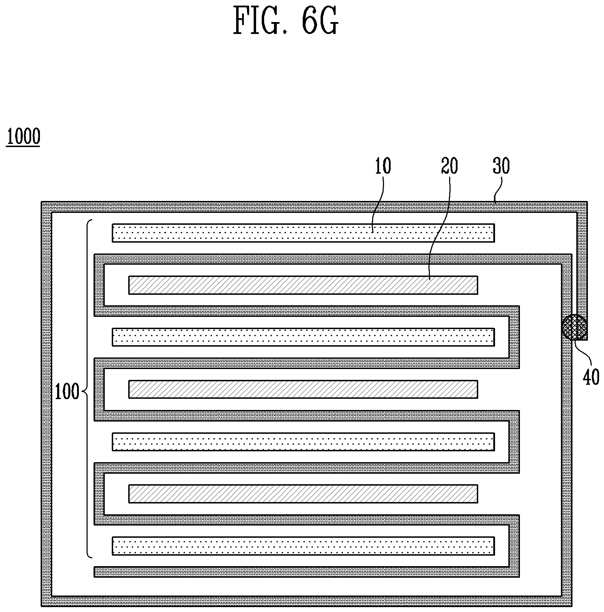

FIGS. 6A to 6G are diagrams for explaining a manufacturing process of an electrode assembly for secondary battery according to an Example of the present invention.

First, referring to FIGS. 4, 5, and 6A, an anode plate 10 may be located on a separator 30 (S111). For the sake of convenience of description, this specification defines a stack to be from a lowermost anode plate to an uppermost anode plate and describes that the exterior thereof is finished by winding around an outer edge with a separator. However, in an actual process, forming a stack may begin with disposing a lowermost anode plate on a previously prepared separator.

Next, referring to FIGS. 4, 5, and 6B, a separator 30 may be folded above an anode plate 10 (S 112). Accordingly, three directions of an anode plate 10 may be surrounded by a separator 30.

Next, referring to FIGS. 4, 5, and 6C, a cathode plate 20 may be placed on a separator 30 (S121), and then, referring to FIGS. 4, 5, and 6D, a separator 30 may be folded above the cathode electrode plate 20 (S 122).

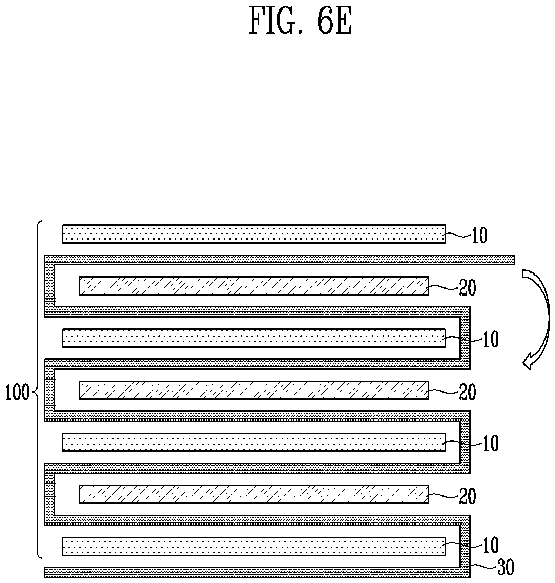

In this way, by repeating the process of FIGS. 6A to 6D, which is S111 to S 122, a stack 100 as shown in FIG. 6E may be formed. Referring to FIGS. 4, 5, and 6E, an anode plate 10 is located at a lowermost portion and an uppermost portion of a stack 100, and forming a stack may be completed without a separator surrounding an anode 10 of an uppermost portion.

Thereafter, referring to FIGS. 4, 5, and 6F, by bending an end of a separator 30 in the stacking direction toward the bottom, not toward the top, the separator 30 may be wound to surround the outer edge of a stack 100 clockwise. When the exterior of a stack 100 is wound by bending a separator 30 in this manner, the area of a separator 30 required for finishing the exterior of a stack 100 may be minimized.

Finally, referring to FIGS. 4, 5, and 6G, an end of a separator 30 may be fixed to a side surface of a stack through an adhesive 40 (S220). More specifically, an end of a separator 30 may be bonded to be fixed to another portion of the separator 30 located on a side surface of a stack.

However, FIGS. 6A to 6G are only a manufacturing process of an electrode assembly for secondary battery according to an Example of the present invention, and a manufacturing method of an electrode assembly for secondary battery according to an Example of the present invention is not limited thereto. All types of stacking methods and shapes and separator bending directions and winding shapes that satisfy the recitations of the claims may be applied.

According to an Example of the present invention, a lithium secondary battery comprising an electrode assembly for secondary battery is provided.

All the description of an electrode assembly for secondary battery described above may be applied to a lithium secondary battery according to an Example of the present invention.

An electrode assembly for secondary battery may comprise a plurality of anode plates, a plurality of cathode plates, and a separator.

A cathode plate and an anode plate may each comprise a current collector and an active material layer disposed on the current collector. For example, a cathode plate may comprise a cathode current collector and a cathode active material layer, and an anode plate may comprise an anode current collector and an anode active material layer.

The current collector may comprise a known conductive material within a range that does not cause a chemical reaction in a lithium secondary battery. For example, a current collector may comprise any one of stainless steel, nickel (Ni), aluminum (Al), titanium (Ti), copper (Cu), and alloys thereof, and may be provided in various forms such as a film, a sheet, a foil, and the like.

An active material layer comprises an active material. For example, a cathode active material layer may comprise a cathode active material, and an anode active material layer may comprise an anode active material.

A cathode active material may be a material which lithium (Li) ions can be inserted to and extracted from. A cathode active material may be a lithium metal oxide. For example, a cathode active material may be one of an lithium manganese-based oxide, a lithium nickel-based oxide, a lithium cobalt-based oxide, a lithium nickel manganese-based oxide, a lithium nickel cobalt manganese-based oxide, a lithium nickel cobalt aluminum-based oxide, a lithium iron phosphate-based compound, a lithium cobalt phosphate-based compound, a lithium cobalt phosphate-based compound, and a lithium vanadium phosphate-based compound, but is not necessarily limited to a specific example.

An anode active material may be a material which lithium ions can be inserted to and extracted from. For example, an anode active material may be any one of carbon-based materials such as crystalline carbon, amorphous carbon, carbon composite, and carbon fiber, a lithium alloy, silicon (Si), and tin (Sn). According to an Example, an anode active material may be natural graphite or artificial graphite, but is not limited to a specific example.

A cathode plate and an anode plate may each further comprise a binder and a conductive material.

A binder may improve mechanical stability by mediating a bond between a current collector and an active material layer. According an Example, a binder may be an organic binder or an aqueous binder, and may be used together with a thickening agent such as carboxymethyl cellulose (CMC). According an Example, an organic binder may be any one of vinylidene fluoride-hexafluoropropylene copolymer (PVDF-co-HFP), polyvinylidene fluoride (PVDF), polyacrylonitrile, and polymethylmethacrylate, and an aqueous binder may be styrene-butadiene rubber (SBR) but is not necessarily limited thereto.

A conductive material may improve electrical conductivity of a lithium secondary battery. A conductive material may comprise a metal-based material. According to an Example, a conductive material may comprise a conventional carbon-based conductive material. For example, a conductive material may comprise any one of graphite, carbon black, graphene, and carbon nanotubes. Preferably, a conductive material may comprise carbon nanotubes.

In addition, an electrode assembly for secondary battery may further comprise a cathode tab extending from a cathode plate and an anode tab extending from an anode plate. In one Example, a cathode tab and an anode tab may protrude from a cathode plate and an anode plate, respectively, in a direction perpendicular to a direction in which a separator is folded, that is, in a length direction (X-axis direction). A cathode tab and an anode tab may protrude in a same direction along a length direction or in opposite directions along a length direction.

A separator may be disposed between a cathode plate and an anode plate. A separator is configured to prevent an electrical short circuit between a cathode plate and an anode plate and to generate a flow of ions.

According to an Example, a separator may comprise a porous polymer film or a porous non-woven fabric. Here, the porous polymer film may be configured as a single layer or multiple layers comprising a polyolefin polymer such as an ethylene polymer, a propylene polymer, an ethylene/butene copolymer, an ethylene/hexene copolymer, and an ethylene/methacrylate copolymer. A porous non-woven fabric may comprise glass fibers of high melting point and polyethylene terephthalate fibers but is not limited thereto. According to an Example, a separator may be a ceramic coated separator (CCS) comprising ceramic.

In addition, a secondary battery according to an Example of the present invention may comprise a case in which an electrode assembly for secondary battery is accommodated. The shape of a case may be prismatic, cylindrical, pouch, etc., but is not limited to a specific shape.

In addition, a secondary battery according to an Example of the present invention may comprise an electrolyte solution provided together with an electrode assembly for secondary battery in a case. A electrolyte may be a non-aqueous electrolyte. An electrolyte may comprise a lithium salt and an organic solvent.

According to an Example, an organic solvent may comprise any one of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

## Claims

1. An electrode assembly for secondary battery, comprising:
a plurality of anode plates;
a plurality of cathode plates; and
a separator disposed between the plurality of cathode plates and the plurality of anode plates,
wherein the separator is folded in a zigzag shape, and the plurality of anode plates and the plurality of cathode plates are alternately stacked in a section between folded portions of the separator to form a stack, and
an anode plate is disposed on an uppermost portion and a lowermost portion of the stack.

2. The electrode assembly for secondary battery according to claim 1, wherein the separator externally finishes the stack by winding around an outer edge of the stack.

3. The electrode assembly for secondary battery according to claim 2, wherein the separator winds around an outer edge of the stack along a stacking direction of the stack.

4. The electrode assembly for secondary battery according to anyone of claims 1 to 3, wherein an end of the separator is fixed to a side surface of the stack.

5. The electrode assembly for secondary battery according to claim 4, wherein an end of the separator is fixed to a side surface of the stack by an adhesive.

6. The electrode assembly for secondary battery according to any of claims 1 to 5, wherein a separator of two or more layers is located under the stack.

7. The electrode assembly for secondary battery according to any of claims 1 to 6, wherein the area of the plurality of anode plates is larger than the area of the plurality of cathode plates, and
wherein the area of the section between folded portions of the separator is larger than the area of each of the plurality of anode plates.

8. The electrode assembly for secondary battery according to anyone of claims 1 to 7, wherein the length and the width of the plurality of anode plates are greater than the length and the width of the plurality of cathode plates, respectively,
wherein the length and the width of the section between folded portions of the separator are greater than the length and the width of the plurality of anode plates, respectively,
wherein the length and the width are a length-direction dimension and a width-direction dimension of the stack,
wherein the width-direction is a direction in which the separator is folded, and
wherein the length-direction is perpendicular to the stacking direction of the stack and the width-direction.

9. The electrode assembly for secondary battery according to anyone of claims 1 to 8, wherein a length-direction gap of the plurality of anode plates and the plurality of cathode plates is larger than a width-direction gap of the plurality of anode plates and the plurality of cathode plates,
wherein a length of the section between folded portions of the separator and a length-direction gap of the plurality of anode plates are larger than a width of the section between folded portions of the separator and a width-direction gap of the plurality of anode plates,
wherein the length-direction gap is a distance difference from the center of the anode plates, the cathode plates, and the section between folded portions of the separator to one length-direction end of each of the anode plates, the cathode plates, and the section between folded portions of the separator, and
wherein the width-direction gap is a distance difference from the center of the anode plates, the cathode plates, and the section between folded portions of the separator to one width-direction end of each of the anode plates, the cathode plates, and the section between folded portions of the separator, and

10. The electrode assembly for secondary battery according to claims 8 or 9, wherein the plurality of anode plates fully cover the plurality of cathode plates in both the length direction and the width direction, and
wherein the section between folded portions of the separator fully covers the plurality of anode plates in both the length direction and the width direction.

11. The electrode assembly for secondary battery according to claims 9 or 10, wherein a length-direction gap of the plurality of anode plates and the plurality of cathode plates is 2.0 mm to 5.0 mm,
wherein a width-direction gap of the plurality of anode plates and the plurality of cathode plates is 0.5 mm to 2.0 mm,
wherein a length of the section between folded portions of the separator and a length-direction gap of the plurality of anode plates are 2.0 mm to 5.0 mm, and
wherein a width of the section between folded portions of the separator and a width-direction gap of the plurality of anode plates are 0.5 mm to 2.0 mm.

12. A manufacturing method of an electrode assembly for secondary battery, comprising:
forming a stack in which one or more cathode plates, one or more anode plates, and a separator are located between two anode plates located at an uppermost portion and a lowermost portion; and
winding around an outer edge of the stack with the separator,
wherein the separator is folded in a zigzag shape, and
wherein in the stack, the one or more cathode plates and the one or more anode plates may be alternately stacked in a section between folded portions of the separator.

13. The manufacturing method of an electrode assembly for secondary battery according to claim 12, wherein the forming a stack comprises:
locating an anode plate on a separator and folding the separator on the anode plate; and
locating a cathode plate on the separator and folding the separator on the cathode plate.

14. The manufacturing method of an electrode assembly for secondary battery according to claim 13, wherein the forming a stack further comprises:
aligning positions of the anode plate and the cathode plate.

15. The manufacturing method of an electrode assembly for secondary battery according to claim 14, wherein, when viewed from the stacking direction of the stack, the cathode plate is aligned so as not to protrude beyond the anode plate, and the anode plate is aligned so as not to protrude beyond the section between folded portions of the separator.
